# EUROPEAN PATENT APPLICATION

(11) **EP 3 875 289 A1**
(43) Date of publication of application: **08.09.2021**
(21) Application number: 19878426.6
(22) Date of filing: 31.10.2019
(51) Int. Cl.: B60C 15/06

(54) **TIRE**

(30) Priority: 31.10.2018 JP 2018205134
(71) Applicant: BRIDGESTONE CORPORATION, Chuo-ku Tokyo 104-8340 (JP)
(72) Inventor: HASEGAWA, Keiichi, Tokyo 104-8340 (JP)
(74) Representative: Oxley, Robin John George
(86) International application number: PCT/JP2019/042933
(87) International publication number: WO 2020/091019

(57) **Abstract**

The bead portion (60) of the pneumatic tire (10) includes a bead structure (61) having a bead core (62) composed of bead cords, and an annular plate (80) which is annular and extends to the tire circumferential direction and is formed of a resin material. The elastic modulus of the annular plate (80) varies in tire radial direction.

## Description

### [Technical Field]

The present invention relates to a tire in which a resin-made annular plate is provided in a bead portion.

### [Background Art]

Conventionally, for the purpose of improving the steering stability and the riding comfort, a tire in which a resin annular plate is provided in a bead portion is known (See Patent Literature 1.).

Specifically, an annular plate is provided along the tire circumferential direction on the outside of the tire width direction of the folded portion of a carcass ply folded back to the outside of the tire width direction via a bead core.

### [Citation List]

### [Patent Literature]

[PTL 1] Japanese Unexamined Patent Application Publication No. 2014-234074

### [Summary of Invention]

Since the rigidity of the bead portion can be easily controlled by using the resin annular plate as described above, it is easy to realize required performance such as steering stability and riding comfort.

However, it is required to realize the required performance at a higher level by more precisely controlling the rigidity of the bead portion.

Accordingly, an object of the present invention is to provide a tire that can achieve, at a higher level, required performances such as steering stability and riding comfort by using a resin annular plate.

One aspect of the present invention is a tire including a tread portion in contact with a road surface, a tire side portion continuous to the tread portion and positioned inside in a tire radial direction of the tread portion, and a bead portion continues to the tire side portion and positioned inside in the tire radial direction of the tire side portion. The bead portion includes a bead structure having a bead core composed of a bead cord, and an annular plate extending to the tire circumferential direction and formed of a resin material. The elastic modulus of the annular plate varies in tire radial direction.

### [Brief Description of Drawings]

FIG. 1 is a cross-sectional view of a pneumatic tire 10.
FIG. 2 is a partially enlarged sectional view of the pneumatic tire 10.
FIG. 3 is a sole plan view of an annular plate 80.
FIG. 4 is a sole plan view of an annular plate 80 A.
FIG. 5 is a sole plan view of an annular plate 80 B.
FIG. 6 is a sole plan view of an annular plate 80 C.
FIG. 7 is a cross-sectional view of the annular plate 80 C along line F7-F7 of FIG. 6.
FIG. 8 is a partially enlarged cross-sectional view of a pneumatic tire 10 A according to a modified example.

### [Description of Embodiments]

Embodiments will be described below with reference to the drawings. The same functions and configurations are denoted by the same or similar reference numerals, and descriptions thereof are omitted as appropriate.

### (1)Overall structure of tire

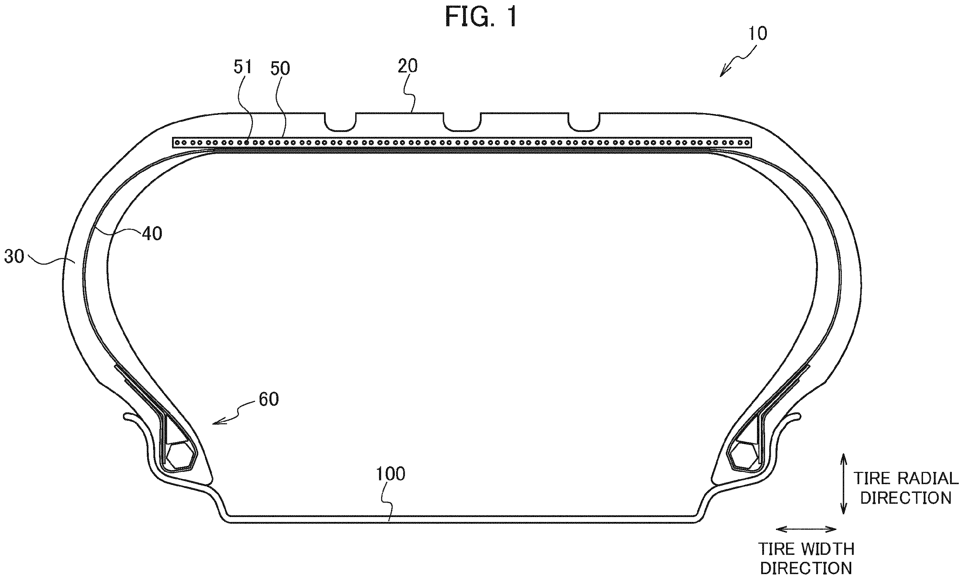

FIG. 1 is a sectional view of the pneumatic tire 10 according to the present embodiment. Specifically, FIG. 1 is a cross-sectional view of the pneumatic tire 10 along tire width direction and tire radial direction. In FIG. 1, the sectional hatching is not shown (hereinafter the same).

As shown in FIG. 1, the pneumatic tire 10 includes a tread portion 20, a tire side portion 30, a carcass ply 40, a belt layer 50, and a bead portion 60.

The tread portion 20 is a part contacting with a road surface (unillustrated). On the tread portion 20, a pattern (unillustrated) corresponding to the use environment of the pneumatic tire 10 and the kind of a vehicle to be mounted is formed.

The tire side portion 30 continues to the tread portion 20 and is positioned inside in the tire radial direction of the tread portion 20. The tire side portion 30 is a region from the tire width direction outside end of the tread portion 20 to the upper end of the bead portion 60. The tire side portion 30 is sometimes referred to as a side wall or the like.

The carcass ply 40 forms a skeleton of the pneumatic tire 10. The carcass ply 40 has a radial structure in which carcass cords (unillustrated) arranged radially along the tire radial direction are covered with a rubber material. However, the present invention is not limited to a radial structure, and may be a bias structure in which the carcass cords are arranged so as to cross each other in the tire radial direction.

The carcass cord is not particularly limited, and can be formed of an organic fiber cord in the same manner as a tire for a standard passenger car.

The belt layer 50 is provided inside the tire radial direction of the tread portion 20. The belt layer 50 is a single-layer spiral belt having a reinforcing cord 51 and the reinforcing cord 51 is covered with a resin. However, the belt layer 50 is not limited to a single-layer spiral belt. For example, the belt layer 50 may be a two-layer interlaced belt covered with rubber.

As the resin for covering the reinforcing cord 51, a resin material having a higher tensile elastic modulus than that of a rubber material constituting the tire side portion 30 and a rubber material constituting the tread portion 20 are used. As the resin for covering the reinforcing cord 51, a thermoplastic resin having elasticity, a thermoplastic elastomer (TPE), a thermosetting resin or the like can be used. It is desirable to use a thermoplastic elastomer in consideration of elasticity in running and moldability in manufacturing.

The thermoplastic elastomer includes a polyolefin-based thermoplastic elastomer (TPO), a polystyrene-based thermoplastic elastomer (TPS), a polyamide-based thermoplastic elastomer (TPA), a polyurethane-based thermoplastic elastomer (TPU), a polyester-based thermoplastic elastomer (TPC), a dynamically crosslinked thermoplastic elastomer (TPV), etc.

Examples of the thermoplastic resin include polyurethane resin, polyolefin resin, vinyl chloride resin, polyamide resin, and the like. Further, as the thermoplastic resin material, for example, a material having a deflection temperature under load (At 0.45 MPa Load) specified in ISO 75 -2 or ASTM D648 of 78 ° C or more, a tensile yield strength specified in JIS K7113 of 10 MPa or more, a tensile fracture elongation specified in JIS K7113 of 50% or more, and a Vicat softening temperature (method A) specified in JIS K7206 of 130 ° C or more can be used.

The bead portion 60 continues to the tire side portion 30 and is positioned inside in the tire radial direction of tire side portion 30. The bead portion 60 is an annular shape extending to the tire circumferential direction.

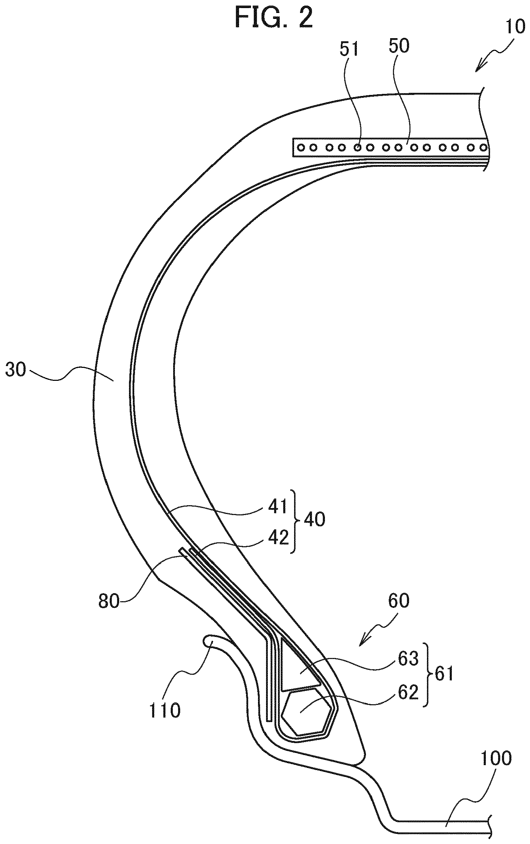

The bead portion 60 is locked to a flange portion 110 (Not shown in FIG. 1, see FIG. 2) formed at the radially outside end of the rim wheel 100.

An inner liner (unillustrated) for preventing air (or a gas such as nitrogen) filled in an internal space of the pneumatic tire 10 assembled to the rim wheel 100 from leaking is stuck to the tire inner side surface of the pneumatic tire 10.

### (2)Bead portion configuration

FIG. 2 is a partially enlarged sectional view of the pneumatic tire 10. Specifically, FIG. 2 is a partially enlarged cross-sectional view of pneumatic tire 10 including the bead portion 60 along the tire width direction and the tire radial direction.

As shown in FIG. 2, the bead portion 60 includes a bead structure 61 and an annular plate 80. The bead structure 61 has a bead core 62 and a bead filler 63.

The bead core 62 is composed of a bead cord (unillustrated) formed of a metal material (For example, steel.). Specifically, the bead core 62 is formed by twisting a plurality of bead cords.

The bead filler 63 is positioned outside of the bead core 62 in the tire radial direction. The bead filler 63 is formed of, for example, a rubber member harder than other parts.

The carcass ply 40 has a body portion 41 and a folded portion 42. The body portion 41 is provided over the tread portion 20, the tire side portion 30, and the bead portion 60, and is a portion until it is folded in the bead portion 60, specifically, a bead core 62.

The folded portion 42 is a portion continued to the body portion 41 and folded back to the outside of the tire width direction via the bead structure 61. The folded-back portion 42 is curved along the shape of the bead portion 60 so as to fall to the outside of the tire width direction.

The annular plate 80 is an annular plate extending into the tire circumferential direction. The annular plate 80 is bent along the shape of the carcass ply 40, specifically, the folded portion 42.

In this embodiment, the annular plate 80 is provided outside in the tire width direction of the folded portion 42. Specifically, the annular plate 80 adheres to the folded portion 42 from the outside of the tire width direction.

### (3)Shape example of annular plate

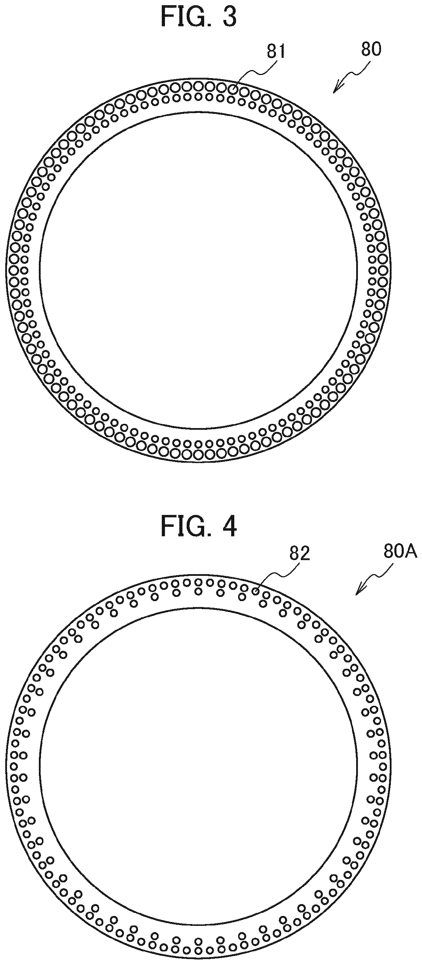

Next, with reference to FIGS. 3 to 7, the shape of the annular plate 80 and other shape examples of the annular plate will be described.

Specifically, the shapes of the annular plates 80, 80 A, 80 B and 80 C will be described. The elastic moduli of the annular plates 80, 80 A, 80 B and 80 C vary in tire radial direction. In this embodiment, the elastic moduli of the annular plates 80, 80 A, 80 B and 80 C gets lower from the inner side of the tire radial direction toward the outer side of the tire radial direction.

### (3.1) Shape example 1

FIG. 3 is a sole plan view of the annular plate 80. As shown in FIG. 3, a number of holes 81 are formed on the annular plate 80. Specifically, a plurality of holes 81 are formed along the tire radial direction in an outer portion in the tire circumferential direction of the annular plate 80.

In this embodiment, the hole 81 is circular. The diameter size of the hole 81 is different in the radial direction of the annular plate 80 (that is in tire radial direction). Specifically, the diameter size of the hole 81 in outer portion in the tire radial direction is larger than the diameter size in inner portion in the tire radial direction.

Thus, the elastic modulus of the annular plate 80 gets lower from the inner side in the tire radial direction toward the outer side in the tire radial direction. The number of holes 81 may be adjusted according to the required elastic modulus of the annular plate 80.

### (3.2) Shape example 2

FIG. 4 is a sole plan view of the annular plate 80 A. As shown in FIG. 4, a number of holes 82 are formed in the annular plate 80 A similarly to the annular plate 80. Specifically, a plurality of holes 82 are formed along the tire radial direction in an outer portion in tire circumferential direction of the annular plate 80 A.

In this embodiment, the hole 82 is circular. The diameter size of the hole 82 is the same in tire radial direction.

On the other hand, the number of holes 82 formed along the tire circumferential direction in the outer portion in the tire width direction outside is larger than the number of holes 82 formed along the tire circumferential direction in the inner portion in the tire width direction.

Thus, the elastic modulus of the annular plate 80 A gets lower from the inner side in the tire radial direction toward the outer side in the tire radial direction. The diameter size of the hole 82 may be adjusted according to the required elastic modulus of the annular plate 80 A.

### (3.3) Shape example 3

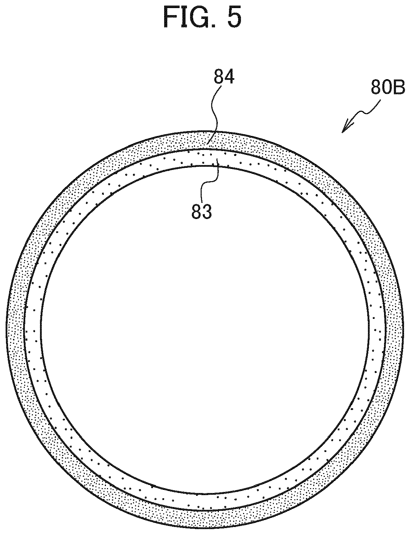

FIG. 5 is a sole plan view of the annular plate 80 B. As shown in FIG. 5, the annular plate 80 B is formed of a plurality of resin materials having different elastic moduli.

Specifically, the annular plate 80 B is formed by an inner annular portion 83 and an outer annular portion 84. The inner annular portion 83 is located inside in the radial direction of the annular plate 80 B (that is in tire radial direction). The outer annular portion 84 is positioned outside in the tire radial direction.

The elastic modulus of the outer annular part 84 is lower than the elastic modulus of the inner annular part 83. Thus, the annular plates 80 B having different elastic moduli in the tire radial direction can be manufactured by extrusion molding, welding, insert molding or the like of different resin materials.

### (3.4) Shape example 4

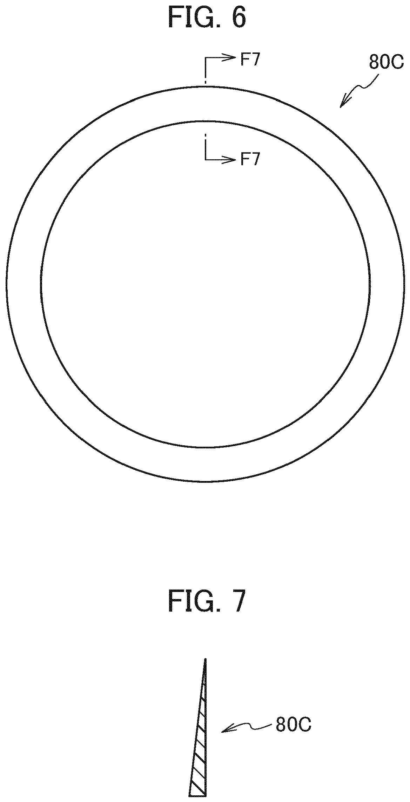

FIG. 6 is a sole plan view of the annular plate 80 C. FIG. 7 is a cross-sectional view of the annular plate 80 C along line F7-F7 of FIG. 6.

As shown in FIGS. 6 and 7, the thickness of the annular plate 80 C gets thinner from the inside of the tire radial direction toward the outside of the tire radial direction.

Thus, the elastic modulus of the annular plate 80 C gets thinner from the inner side of the tire radial direction toward the outer side of the tire radial direction. Thus, the annular plates 80 C having different thicknesses in the tire radial direction can be produced by injection molding or cutting an annular plate having a constant thickness.

### (4)Function and effects

According to the embodiment described above, the following effects can be obtained. Specifically, the elastic moduli of the above-mentioned annular plates 80, 80 A, 80 B and 80 C vary in tire radial direction. Therefore, the rigidity of the bead portion 60 can be easily controlled.

In particular, since the annular plate is formed of a resin material, the elastic modulus can be easily changed in the radial direction (tire radial direction) of the annular plate. In the case of a conventional rigid member, such as an organic fiber or steel cord, the stiffness is generally uniform over the entire area of the rigid member.

Therefore, for example, it is difficult to increase the rigidity (elastic modulus) of such a rigid member inside in the tire radial direction and decrease the rigidity toward the outside of the tire radial direction. According to the annular plate made of resin, the rigidity (elastic modulus) can be easily controlled by a method such as the annular plates 80, 80 A, 80 B and 80 C. Thus, the rigidity of the bead portion 60 can be controlled more precisely.

That is, according to the pneumatic tire 10, the performance required for the pneumatic tire 10 (Steering stability, ride comfort, etc.) can be realized at a higher level by using the resin annular plate.

In the annular plate 80 and the annular plate 80 A, a plurality of holes (hole 81 and hole 82) are formed along the tire circumferential direction in the outer portion in the tire radial direction of the annular plate. Therefore, the elastic moduli of the annular plate 80 and the annular plate 80 A gets lower from the inside in the tire radial direction toward the outside in the tire radial direction.

The annular plate 80 B is formed of a plurality of resin materials having different elastic moduli. Specifically, the elastic modulus of the outer annular portion 84 is lower than the elastic modulus of the inner annular portion 83. Therefore, the elastic modulus of the annular plate 80 B gets lower from the inner side in the tire radial direction toward the outer side in the tire radial direction.

Furthermore, the thickness of the annular plate 80 C gets thinner from the inside in the tire radial direction toward the outside in the tire radial direction. Therefore, the elastic modulus of the annular plate 80 C gets lower from the inner side in the tire radial direction toward the outer side in the tire radial direction.

Thus, the elastic modulus in the tire radial direction of the annular plate can be easily controlled. In order to enhance the steering stability and ride comfort, it is important to precisely control the rigidity of the bead portion 60 in the tire radial direction, and the above-mentioned annular plate can realize the required performance at a higher level.

### (5)Other embodiments

Although the contents of the present invention have been described above with reference to the examples, it will be obvious to those skilled in the art that the present invention is not limited to these descriptions and that various modifications and improvements are possible.

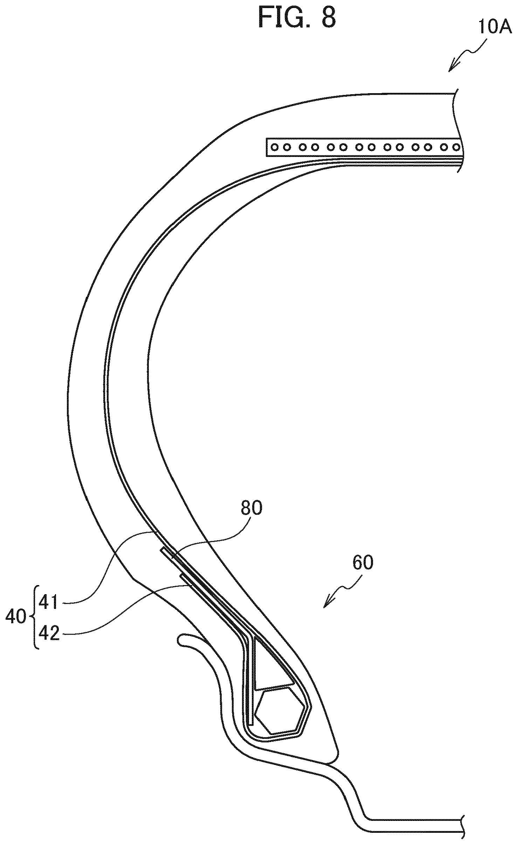

For example, the position where the annular plate 80 is provided may be changed as follows. FIG. 8 is a partially enlarged sectional view of the pneumatic tire 10 A according to the modified example. Specifically, FIG. 8 is a partially enlarged cross-sectional view of pneumatic tire 10 A including the bead portion 60 along the tire width direction and the tire radial direction.

As shown in FIG. 8, in the pneumatic tire 10 A, the annular plate 80 is provided between the bead structure 61 and the folded portion 42 of the carcass ply 40.

That is, the annular plate 80 may be provided outside the tire width direction of the folded portion 42 of the carcass ply 40 or between the bead structure 61 and the folded portion 42 of the carcass ply 40.

In the above-described embodiment, the elastic modulus of the annular plate gets lower from the inner side in the tire radial direction toward the outer side in the tire radial direction, but the present invention is not limited thereto. That is, the elastic modulus of the annular plate may be changed in the tire radial direction, for example, may be increased from the inside of the tire radial direction toward the outside of the tire radial direction.

While embodiments of the invention have been described as above, it should not be understood that the statements and drawings which form part of this disclosure are intended to limit the invention. Various alternative embodiments, examples and operating techniques will become apparent to those skilled in the art from this disclosure.

### [Reference Signs List]

- 10, 10: A Pneumatic tire
- 20: Tread portion
- 30: Tire side portion
- 40: Carcass ply
- 41: Body portion
- 42: Folded portion
- 50: Belt layer
- 51: Reinforcement cord
- 60: Bead portion
- 61: Bead structure
- 62: Bead Core
- 63: Bead filler
- 80, 80 A, 80 B, 80 C, 80: P Annular plate
- 81, 82: Holes
- 83: Inner annular portion
- 84: Outer annular portion
- 100: Rim wheel
- 110: flange portion

## Claims

1. A tire comprising:
a tread portion in contact with a road surface;
a tire side portion continuous to the tread portion and positioned inside in a tire radial direction of the tread portion; and
a bead portion continues to the tire side portion and positioned inside in the tire radial direction of the tire side portion,
wherein the bead portion comprises:
a bead structure having a bead core composed of a bead cord; and
an annular plate extending to the tire circumferential direction and formed of a resin material; wherein
the elastic modulus of the annular plate varies in tire radial direction.

2. The tire according to claim 1, wherein the tire comprises a carcass ply forming a skeleton of the tire,
the carcass ply includes:
a body portion; and
a folded portion continuous to the body portion and folded back to outside in a tire width direction via the bead structure, wherein
the annular plate is provided outside of the folded portion in the tire width direction .

3. The tire according to claim 1, wherein the elastic modulus of the annular plate gets lower from the inner side of the tire radial direction toward the outer side of the tire radial direction.

4. The tire according to claim 1, wherein a plurality of holes are formed along the tire circumferential direction in an outer portion in the tire radial direction of the annular plate.

5. The tire according to claim 1, wherein the annular plate is formed of a plurality of resin materials having different elastic moduli.

6. The tire according to claim 1, wherein the thickness of the annular plate gets thinner from the inner side of the tire radial direction toward the outer side of the tire radial direction.
